# EUROPEAN PATENT SPECIFICATION

(11) **EP 3 324 536 B1**
(45) Date of publication and mention of the grant of the patent: **28.08.2019**
(21) Application number: 17199088.0
(22) Date of filing: 30.10.2017
(51) Int. Cl.: H02P 27/06, H02M 7/217, H02P 6/28

(54) **ELECTRONICALLY COMMUTATED FAN SYSTEM CAPABLE OF BEING SUPPLIED BY AC AND DC POWER SOURCES**
ELEKTRONISCH KOMMUTIERTES GEBLÄSESYSTEM, DAS VON WECHSELSTROM- UND GLEICHSTROMQUELLEN GESPEIST WERDEN KANN
SYSTÈME DE VENTILATEUR À COMMUTATION ÉLECTRONIQUE POUVANT ÊTRE ALIMENTÉ PAR DES SOURCES D'ALIMENTATION CA ET CC

(30) Priority: 17.11.2016 CN 201611013201
(43) Date of publication of application: 23.05.2018
(73) Proprietor: Delta Electronics, Inc., Taoyuan County 33341 (TW)
(72) Inventor: TSENG, Wei-Shuo, 33341 Taoyuan City, (TW); CHUANG, Chao-Chin, 33341 Taoyuan City, (TW); YU, Yao-Yang, 33341 Taoyuan City, (TW); HSIAO, Li-Wei, 33341 Taoyuan City, (TW)
(74) Representative: 2K Patentanwälte Blasberg Kewitz & Reichel

(56) References cited:
- CN-A- 101 068 083
- JP-B2- 3 396 126
- KR-A- 20160 065 618
- US-A- 4 027 204
- US-A1- 2014 139 164
- US-A1- 2014 268 953
- US-A1- 2016 268 950
- US-B2- 7 502 233

## Description

### BACKGROUND OF THE INVENTION

### Field of the Invention

The present invention relates to an electronically commutated fan system, and especially relates to an electronically commutated fan system capable of being supplied by AC and DC power sources.

### Description of the Related Art

Comparing with the conventional alternating-current fan (AC Fan), the electronically commutated fan (EC Fan) has the advantages of high efficiency, controllable rotational speed, applicable communication interfaces and multiple protection mechanisms. According to the basic principles of the motor, the rotational speed of the motor is dependent upon the input power source. Therefore, when the input power source changes, the duty cycle is adjusted by the electronically commutated fan to maintain the stabilization of the rotational speed of the motor. However, if the variation of the input power source is too large (for example, the voltage variation is over 100 volts) thus exceeding the range of steadily adjusting the rotational speed by adjusting the duty cycle, the rotational speed of the motor is still changed due to the variation of the input power source, so that the rotational speed predetermined by the system cannot be achieved. Moreover, the voltage of the motor is deviated from the voltage of the original motor design which has the peak efficiency due to the variation of the input power source, so that the efficiency of the motor is decreasing. Fan systems of the abovementioned kind are e.g. known from KR 2016 0065618 A, US 2014/139164 A1, US 2016/268950 A1, US 2014/268953 A1, US 4 027 204 A and US 7 502 233 B2.

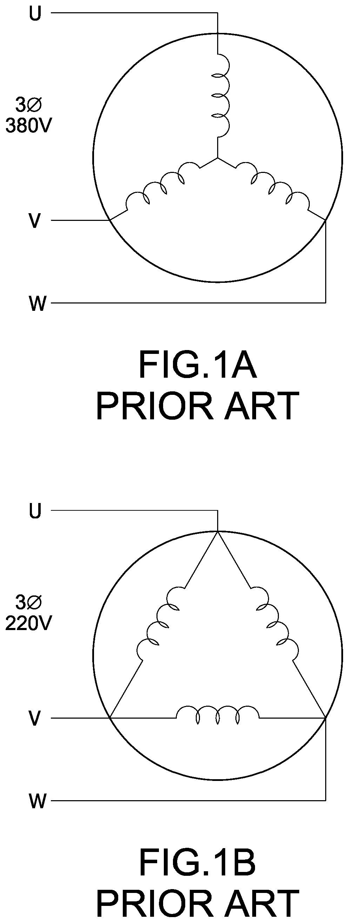

FIG. 1A shows a wye (Y) connection diagram of the related art motor. FIG. 1B shows a delta (Δ) connection diagram of the related art motor. The related art three-phase electronically commutated fan must have the differentiated design according to different input power sources due to the mentioned-above reasons. Usually there are two methods: different motor winding designs according to different voltages, or changing to different connections for the same motor. When the input voltage is three-phase 220 volts, the delta connection shown in FIG. 1B is adopted. When the input voltage is three-phase 380 volts, the wye connection shown in FIG. 1A is adopted. The methods mentioned above have different designs according to different three-phase input voltages (220 volts or 380 volts), so that the electronically commutated fan system mentioned above has following disadvantages:
1. A single three-phase electronically commutated fan system which is applicable to the voltage range of the wide input power source cannot be achieved. The related art electronically commutated fan has different motor winding designs according to different voltage, or changes to different connection for the same motor, so that the three-phase electronically commutated fan with the wide input power source cannot be achieved.
2. The rotational speed of the electronically commutated fan system cannot achieve the predetermined rotational speed required by the cooling system. If the same fan is applied to the three-phase or single-phase power source, because the variation of the input power source is too large thus exceeding the range of steadily adjusting the rotational speed by adjusting the duty cycle, the predetermined rotational speed cannot be achieved, so that the efficiency of the motor is decreasing.
3. The three-phase and single-phase power sources compatible application cannot be provided. The related art electronically commutated fan does not have the three-phase and single-phase power source compatible application, so that the design of the cooling system or module lacks of the flexibility for the application of the power source.
4. The conventional electronically commutated fan system can be supplied only by the AC power source but fails to be supplied by DC power source, and therefore the power supply for the conventional electronically commutated fan system is limited and less flexible.

Therefore, the inventors of the present invention would like to solve the problems mentioned above and would like to design an electronically commutated fan system which has the wide input power source range, and which can maintain the stabilization of the rotational speed of the fan, and which can provide the three-phase and single-phase input compatible application.

### SUMMARY OF THE INVENTION

An objective of the present invention is to provide an electronically commutated fan system capable of being supplied by AC and DC power sources to solve the above-mentioned problems.

In order to achieve the above-mentioned objective, the electronically commutated fan system according to claim 1 is disclosed. Preferred embodiments are defined in dependent claims. The invention is set out in the appended set of claims. The embodiments and/or examples of the following description which are not covered by the appended claims are considered as not being part of the present invention.

### BRIEF DESCRIPTION OF DRAWING

FIG. 1A is a wye connection diagram of the related art motor.
FIG. 1B is a delta connection diagram of the related art motor.
FIG. 2 is a circuit block diagram of an electronically commutated fan system capable of being supplied by AC and DC power sources.
FIG. 3 is a circuit block diagram of the electronically commutated fan system capable of being supplied by AC and DC power sources.
FIG. 4 is a detailed circuit diagram of an inverter unit in FIG. 2.
FIG. 5 is a detailed circuit diagram of a rectifying unit and an inverter unit in FIG. 3.
FIG. 6A is a detailed circuit diagram of a first embodiment of a power conversion unit in FIG. 5.
FIG. 6B is a detailed circuit diagram of a second embodiment of the power conversion unit in FIG. 4.
FIG. 6C is a detailed circuit diagram of a third embodiment of the power conversion unit in FIG. 5.
FIG. 7 is a phase application diagram of an AC input power source.
FIG. 8 is a circuit block diagram of the electronically commutated fan system capable of being supplied by AC and DC power sources according to a first embodiment of the present invention.
FIG. 9 is a circuit block diagram of the electronically commutated fan system capable of being supplied by AC and DC power sources.
FIG. 10 is a circuit block diagram of the electronically commutated fan system capable of being supplied by AC and DC power sources according to a second embodiment of the present invention.

### DETAILED DESCRIPTION OF THE INVENTION

Reference will now be made to the drawing figures to describe the present invention in detail. It will be understood that the drawing figures and exemplified embodiments of present invention are not limited to the details thereof. In addition, the term "AC" represents "alternating-current" and the term "DC" represents "direct-current", and therefore the term "AC-to-DC" represents "alternating-current-to-direct-current", and detailed descriptions are not repeated for brevity.

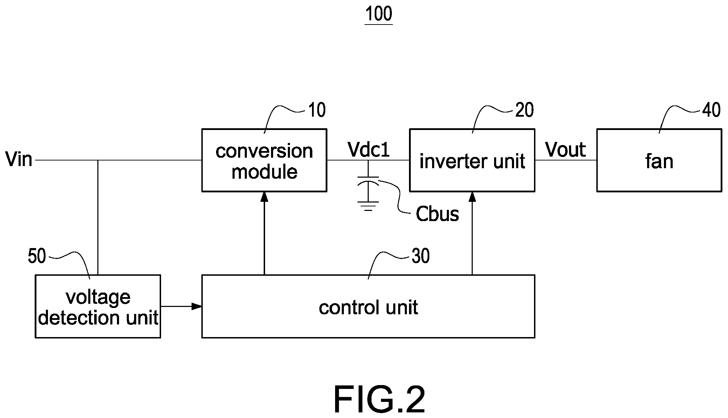

Please refer to FIG. 2, which shows a circuit block diagram of an electronically commutated fan system capable of being supplied by AC and DC power sources (hereinafter referred to as "electronically commutated fan system") according to a first embodiment of the present invention. The electronically commutated fan system 100 includes a conversion module 10, an inverter unit 20, and a control unit 30. The conversion module 10 receives an input power source Vin, and converts the input power source Vin into a first DC power source Vdc1. The inverter unit 20 is connected between the conversion module 10 and a fan 40, and converts the first DC power source Vdc1 into an output power source Vout and provides the output power source Vout to make the fan 40 rotate. The control unit 30 is connected to the conversion module 10 and the inverter unit 20, and adjust a rotational speed of the fan 40 according to feedback signals (not shown) provided from the conversion module 10 and/or the inverter unit 20. In the present invention, the input power source Vin may be a DC input power source or an AC input power source. In other words, the electronically commutated fan system 100 is capable of being supplied by either the AC input power source or the DC input power source.

In this embodiment, when the control unit 30 determines that the input power source Vin is the DC input power source or the AC input power source, the control unit 30 controls the conversion module 10 to convert the DC input power source or the AC input power source into the first DC power source Vdc1. Moreover, when the control unit 30 determines that an amplitude of the input power source Vin is varied, the control unit 30 controls the rotational speed of the fan 40 to be within a first error range Re1. In particular, the control unit 30 determines the input power source Vin according to information of the input power source Vin detected by a voltage detection unit, and the description of the voltage detection unit is detailed hereinafter.

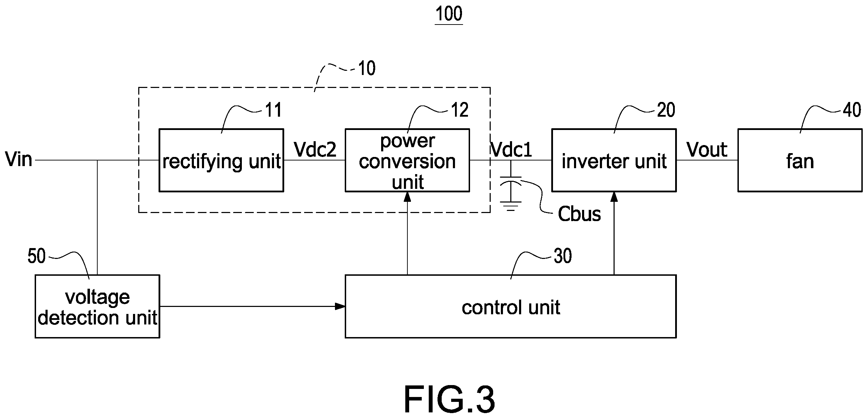

Please refer to FIG. 3, which shows a circuit block diagram of the electronically commutated fan system capable of being supplied by AC and DC power sources according to a second embodiment of the present invention. The major difference between the second embodiment shown in FIG. 3 and the first embodiment shown in FIG. 2 is that the conversion module 10 includes a rectifying unit 11 and a power conversion unit 12. The rectifying unit 11 receives the input power source Vin and rectify the input power source Vin into a second DC power source Vdc2. The power conversion unit 12 is connected between the rectifying unit 11 and the inverter unit 20. When the control unit 30 determines that the input power source Vin is the DC input power source and the amplitude of the DC input power source is within a predetermined voltage range, the control unit 30 decouples the power conversion unit 12 to make the second DC power source Vdc2 outputted from the rectifying unit 11 be the first DC power source Vdc1. In one embodiment, the predetermined voltage range is between 220 volts and 480 volts. When the control unit 30 determines that the input power source Vin is the DC input power source and the amplitude of the DC input power source is not within the predetermined voltage range, the power conversion unit 12 is controlled by the control unit 30 to convert the second DC power source Vdc2 into the first DC power source Vdc1.

As shown in FIG. 2 and FIG. 3, the electronically commutated fan system 100 further includes a bus capacitor Cbus. The bus capacitor Cbus is connected between the conversion module 10 and the inverter unit 20, and stores and stabilizes the first DC power source Vdc1 so that a voltage crossing the bus capacitor Cbus being the first DC power source Vdc1. When the control unit 30 determines that the amplitude of the input power source Vin is varied, the conversion module 10 is controlled by the control unit 30 to make the first DC power source Vdc1 be within a second error range Re2 so that the rotational speed of the fan 40 to be within the first error range Re1. For example, when a variation range of the amplitude of the AC power source or a variation range of an absolute value of the amplitude of the DC power source is between 220 volts and 480 volts, the conversion module 10 is controlled by the control unit 30 to make the first DC power source Vdc1 be within the second error range Re2 and the inverter unit 20 is controlled by the control unit 30 to adjust the output power source Vout so that the rotational speed of the fan 40 to be within the first error range Re1.

As shown in FIG. 2 and FIG. 3, the electronically commutated fan system 100 further includes a voltage detection unit 50. The voltage detection unit 50 is connected to the control unit 30 and receives the input power source Vin. The voltage detection unit 50 is used to detect that input power source Vin is the DC input power source or the AC input power source, and detect the amplitude of the input power source Vin, and such as a peak voltage value of the input power source Vin. In addition, a phase and/or a frequency of the AC input power source Vin could be detected by the voltage detection unit 50.

When the peak voltage value of the input power source Vin detected by the voltage detection unit 50 is less than the predetermined voltage value, the control unit 30 controls the conversion module 10 to be operated in a step-up mode, namely the conversion module 10 is a step-up (boost) conversion module to step up the input power source Vin. On the contrary, when the peak voltage value of the input power source Vin detected by the voltage detection unit 50 is greater than the predetermined voltage value, the control unit 30 controls the conversion module 10 to be operated in a step-down mode, namely the conversion module 10 is a step-down (buck) conversion module to step down the input power source Vin. Moreover, the input power source Vin received by the electronically commutated fan system 100 may be a three-phase AC power source or a single-phase AC power source. Also, a range of the input power source Vin is between 220 volts and 480 volts.

As shown in FIG. 2 and FIG. 3, the control unit 30 may include two sub-controllers. In particular, one sub-controller is connected to (the power conversion unit 12 of) the conversion module 10 and the other sub-controller is connected to the inverter unit 20. In other words, the control unit 30 may also control (the power conversion unit 12 of) the conversion module 10 and the inverter unit 20 by the two sub-controllers, respectively.

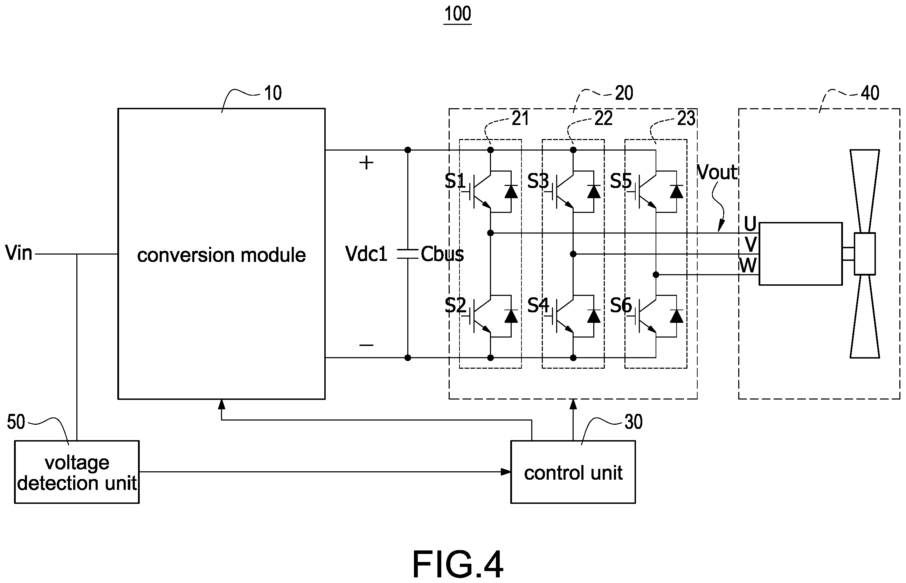

Please refer to FIG. 4, which shows a detailed circuit diagram of an inverter unit in FIG. 2. The inverter unit 20 includes a first bridge arm 21, a second bridge arm 22, and a third bridge arm 23. The first bridge arm 21 has a first upper bridge arm S1 and a first lower bridge arm S2 connected in series to the first upper bridge arm S1. A first phase, such as a U-phase of the fan 40 is electrically connected between the first upper bridge arm S1 and the first lower bridge arm S2. The second bridge arm 22 has a second upper bridge arm S3 and a second lower bridge arm S4 connected in series to the second upper bridge arm S3. A second phase, such as a V-phase of the fan 40 is electrically connected between the second upper bridge arm S3 and the second lower bridge arm S4. The third bridge arm 23 has a third upper bridge arm S5 and a third lower bridge arm S6 connected in series to the third upper bridge arm S5. A third phase, such as a W-phase of the fan 40 is electrically connected between the third upper bridge arm S5 and the third lower bridge arm S6. The bus capacitor Cbus is connected in parallel to the first bridge arm 21, the second bridge arm 22, and the third bridge arm 23. The control unit 30 turns on and turns off the upper bridge arms S1, S3, S5 and the lower bridge arms S2, S4, S6 of the inverter unit 20 to convert the first DC power source Vdc1 across the bus capacitor Cbus into the output power source Vout to provide the output power source Vout to make the fan 40 rotate. In this embodiment, the output power source Vout is a three-phase AC output power source. A motor, which drives the fan 40 is a permanent-magnet synchronous motor (PMSM).

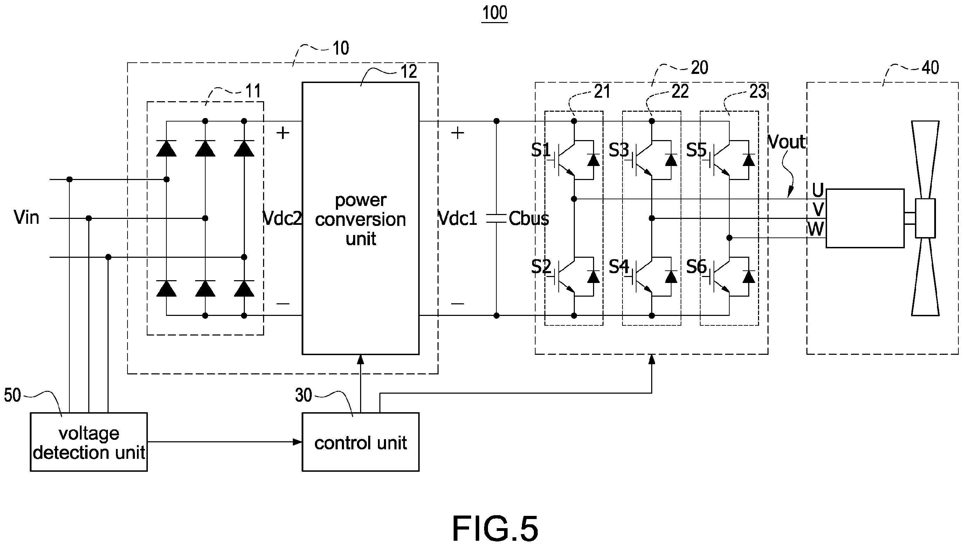

Please refer to FIG. 5, which shows a detailed circuit diagram of a rectifying unit and an inverter unit in FIG. 3. In this embodiment, the rectifying unit 11 is a three-phase bridge rectifying circuit and converts the input power source Vin into the second DC power source Vdc2. Also, the input power source Vin is a three-phase AC input power source. The three-phase bridge rectifying circuit includes three bridge arms, and each of the bridge arms has two diodes including an upper diode and a lower diode connected in series to the upper diode. Also, each connection point between the upper diode and the lower diode is electrically connected to one phase of the three-phase AC input power source. The power conversion unit 12 is electrically connected between the rectifying unit 11 and the inverter unit 20. The power conversion unit 12 converts the second DC power source Vdc2 into the first DC power source Vdc1, and the first DC power source Vdc1 is stored in the bus capacitor Cbus. In a balanced three-phase AC input power source, when the peak voltage value of the three-phase AC input power source is less than the first DC power source Vdc1 across the bus capacitor Cbus, the control unit 30 controls the conversion module 10 to be a step-up (boost) AC-to-DC converter to step up the three-phase AC input power source, thereby regulating and stabilizing the first DC power source Vdc1. On the contrary, when the peak voltage value of the three-phase AC input power source is greater than the first DC power source Vdc1 across the bus capacitor Cbus, the control unit 30 controls the conversion module 10 to be a step-down (buck) AC-to-DC converter to step down the three-phase AC input power source, thereby regulating and stabilizing the first DC power source Vdc1.

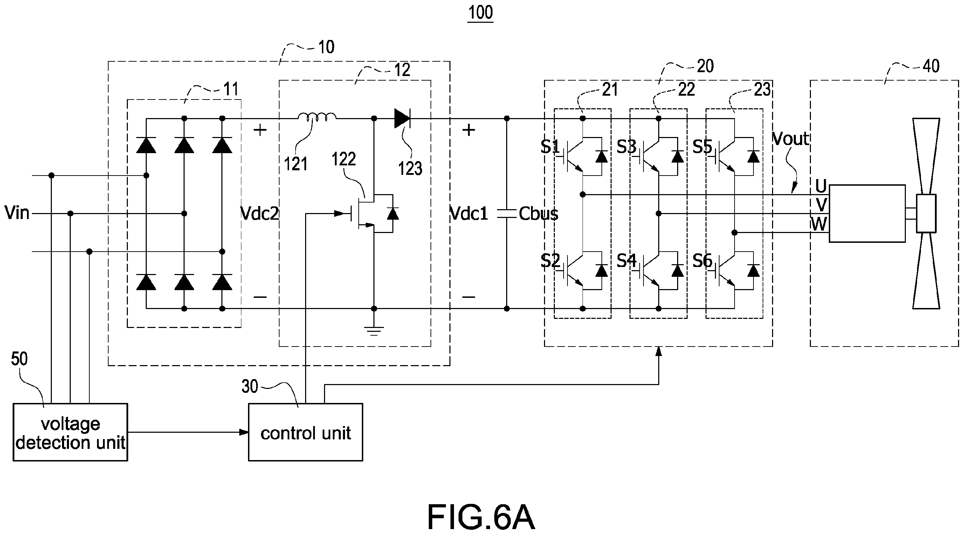

Please refer to FIG. 6A, which shows a detailed circuit diagram of a first embodiment of a power conversion unit in FIG. 5. In this embodiment, the power conversion unit 12 is a step-up (boost) converter. The power conversion unit 12 includes an inductor 121, a switch unit 122, and a diode 123. The inductor 121 has a first end and a second end, and the first end of the inductor 121 is connected to the rectifying unit 11. The switch unit 122 has a first end, a second end, and a control end, and the first end of the switch unit 122 is connected to the second end of the inductor 121, and the second end of the switch unit is grounded. The diode 123 has an anode and a cathode, and the anode is connected to the second end of the inductor 121 and the first end of the switch unit 122, and the cathode is connected to the bus capacitor Cbus. The control unit 30 is connected to the control end of the switch unit 122 and controls turning-on and turning-off of the switch unit 122 to stabilize the first DC power source Vdc1. When the control unit determines that the absolute value of the amplitude of the direct-current power source is within the predetermined voltage range, the switch unit 122 is turned off so that the power conversion unit 12 is decoupled.

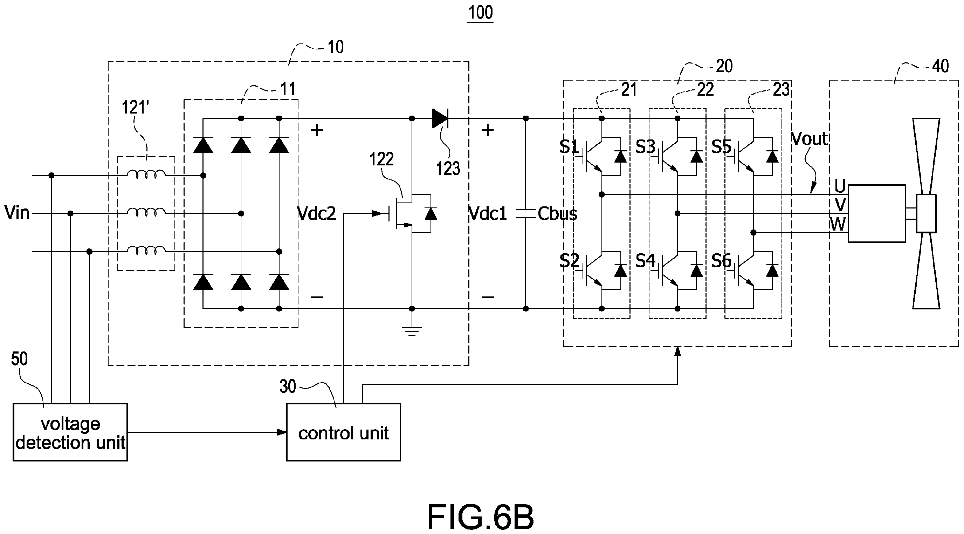

Please refer to FIG. 6B, which shows a detailed circuit diagram of a second embodiment of the power conversion unit in FIG. 4. In this embodiment, the conversion module 10 is a step-up (boost) conversion module. The conversion module 10 includes a rectifying unit 11, an inductor set 121', a switch unit 122, and a diode 123. In particular, the inductor set 121' plays a role is similar to that of the inductor 121 shown in FIG. 6A. The inductor set 121' has three inductors, and each of the inductors is connected to one phase of the input power source Vin to receive the input power source Vin and connected to the rectifying unit 11. More specifically, the rectifying unit 11 is a three-phase bridge rectifying circuit and includes three bridge arms, and each of the bridge arms has two diodes including an upper diode and a lower diode connected in series to the upper diode. Also, each connection point between the upper diode and the lower diode is electrically connected to one inductor of the inductor set 121' and then correspondingly connected to one phase of the input power source Vin. The switch unit 122 has a first end, a second end, and a control end, and the rectifying unit 11 is connected in parallel to the switch unit 122 at the first end and the second end of the switch unit 122, and the second end of the switch unit 122 is grounded. The diode 123 has an anode and a cathode, and the anode is connected to the first end of the switch unit 122 and the rectifying unit 11, and the cathode is connected to the bus capacitor Cbus. The control unit 30 is connected to the control end of the switch unit 122 and controls turning-on and turning-off of the switch unit 122 to stabilize the first DC power source Vdc1. When the control unit 30 determines that the absolute value of the amplitude of the direct-current power source is within the predetermined voltage range, the switch unit 122 is turned off so that the conversion module 10 is decoupled.

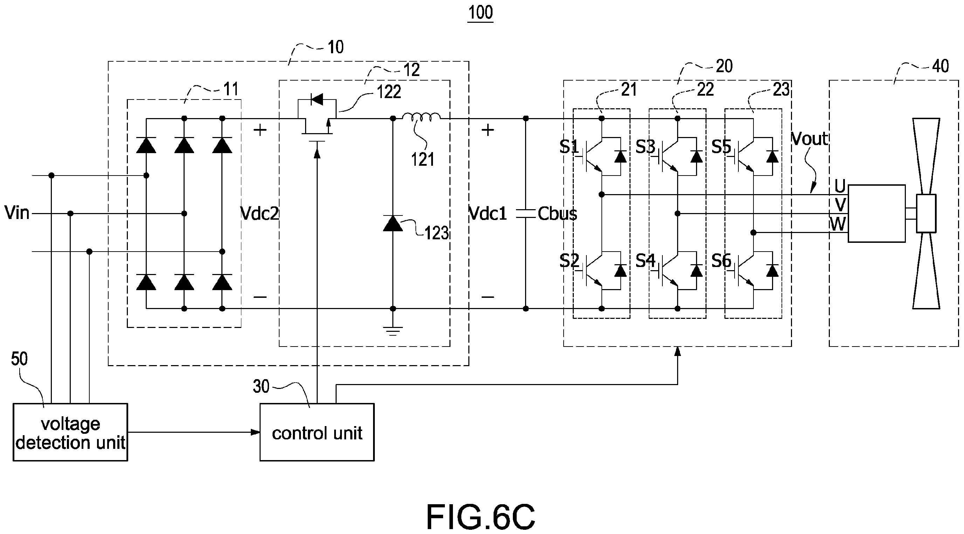

Please refer to FIG. 6C, which shows a detailed circuit diagram of a third embodiment of the power conversion unit in FIG. 5. In this embodiment, the power conversion unit 12 is a step-down (buck) converter. The power conversion unit 12 includes an inductor 121, a switch unit 122, and a diode 123. The switch unit 122 has a first end, a second end, and a control end, and the first end of the switch unit 122 is connected to the rectifying unit 11. The inductor 121 has a first end and a second end, and the first end of the inductor 121 is connected to the second end of the switch unit 122, and the second end of the inductor 121 is connected to the bus capacitor Cbus. The diode 123 has an anode and a cathode, and the cathode is connected to the second end of the switch unit 122 and the first end of the inductor 121, and the anode is grounded. The control unit 30 is connected to the control end of the switch unit 122 and controls turning-on and turning-off of the switch unit 122 to stabilize the first DC power source Vdc1. When the control unit 30 determines that the absolute value of the amplitude of the direct-current power source is within the predetermined voltage range, the switch unit 122 is turned on so that the power conversion unit 12 is decoupled.

Please refer to FIG. 2 or FIG. 4 again, the conversion module 10 is an active power factor corrector (PFC) or also-called a PFC converter. The active PFC is used to adjust an input current of the load to make the load be a pure resistive load, thereby improving the power factor of the power electronic system and increasing power efficiency of the power electronic system. Therefore, the input current and input voltage of the active PFC have the same phase and the same frequency so that the active PFC would maintain its output voltage to be a constant DC voltage. For these reasons, the active PFC, namely the conversion module 10 can convert the input power source Vin into the first DC power source Vdc1 and stabilize the first DC power source Vdc1, so that an amplitude of the first DC power source Vdc1 is not influenced by the variation of the input power source Vin. When the control unit 30 determines that an amplitude of the input power source Vin is varied, the control unit 30 adjusts a duty cycle of controlling an inner switch unit, such as the switch unit 122 (as shown in FIGs. 6A, 6B, 6C) of the conversion module 10 to maintain the first DC power source Vdc1 outputted from the conversion module 10 to be within a second error range Re2. Moreover, the control unit 30 can control the rotational speed of the fan 40 to be within the first error range Re1 since the first DC power source Vdc1 is substantially maintained within the second error range Re2. For example, when the voltage variation of the input power source Vin is between 220 volts and 480 volts, the conversion module 10 maintains the voltage value of the first DC power source Vdc1 to be within the second error range Re2. In particular, the best value of the second error range Re2 is, for example but not limited to, ±3%, namely 97% to 103% of the first DC power source Vdc1. In order words, an upper limitation of the second error range Re2 is plus 3% of the first DC power source Vdc1 and a lower limitation of the second error range Re2 is minus 3% of the first DC power source Vdc1. The conversion module 10 actively controls and provides the first DC power source Vdc1 to the inverter unit 20, and the first DC power source Vdc1 is substantially constant and is not influenced by the voltage variation or power variation of the input power source Vin. Finally, the inverter unit 20 receives the first DC power source Vdc1 and controls the motor driving the fan 40. More specifically, the inverter unit 20 receives control commands provided from the control unit 30 to adjust the rotational speed of the fan 40. Therefore, the motor can avoid the problem that the rotational speed of the motor cannot reach the predetermined rotational speed because the variation of the voltage variation or the power variation of the input power source Vin is too large. Since the first DC power source Vdc1 is maintained at the voltage which is pre-set according to an original motor design that has the peak efficiency, the fan 40 driven by the motor steadily rotates at the high efficiency area and is not influenced by the input power source Vin. Therefore, when the voltage variation or the power variation of the input power source Vin is varied, the rotational speed of the fan 40 can be maintained within the first error range Re1. In particular, the best value of the first error range Re1 is, for example but not limited to, ±3%, namely 97% to 103% of the rotational speed of the fan 40. In order words, an upper limitation of the first error range Re1 is plus 3% of the rotational speed of the fan 40 and a lower limitation of the first error range Re1 is minus 3% of the rotational speed of the fan 40.

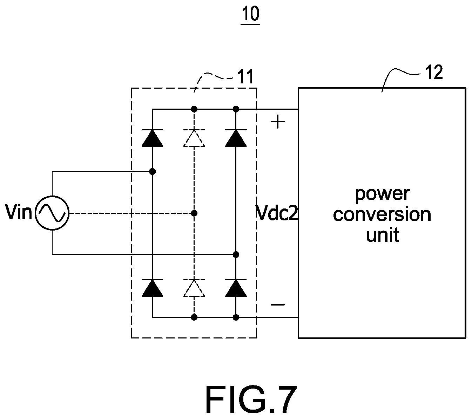

Please refer to FIG. 7, which shows a phase application diagram of an AC input power source according to the present invention. Please refer to FIG. 4 again. Besides the above-mentioned voltage variation of the input power source Vin is between 220 volts and 480 volts, the rectifying unit 11 with the three bridge arms can provide any two bridge arms thereof for applied to a single-phase input power source Vin without changing the topology of the electronic commutation fan system. At this condition, the rectifying unit 11 plays a role of a single-phase bridge rectifier to operate a full-wave rectification for the (single-phase) input power source Vin and outputs the second DC power source Vdc2. In other words, the rectifying unit 11 rectifies the single-phase input power source Vin to output the second DC power source Vdc2 when the single-phase input power source Vin, as the three-phase input power source is received by the rectifying unit 11. The second DC power source Vdc2 is provided to the power conversion unit 12, and then the power conversion unit 12 converts the second DC power source Vdc2 into the first DC power source Vdc1 which is required by the inverter unit 20 as shown in FIG. 3. Therefore, the circuit topologies of the present invention can be applied to the three-phase AC input power source and can be compatible with the application of the single-phase AC input power source directly.

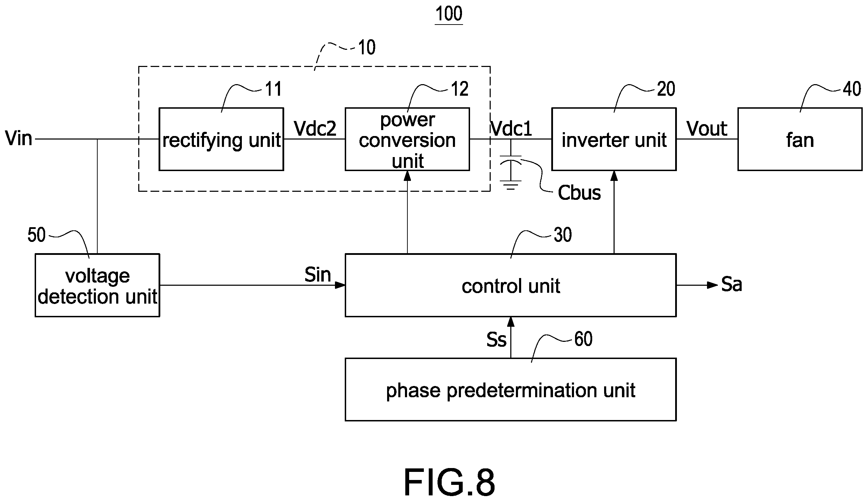

Please refer to Fig. 8, which shows a circuit block diagram of the electronically commutated fan system capable of being supplied by AC and DC power sources according to a third embodiment of the present invention. The electronically commutated fan system 100 can be supplied by a single-phase or three-phase AC input power source. If the three-phase AC input power source Vin is out-phase, however, the three-phase AC input power source Vin is nearly equivalent to the single-phase AC input power source Vin. In other words, when the three-phase AC input power source Vin is out-phase, the feature of the three-phase AC input power source Vin is nearly equivalent to that of the single-phase AC input power source Vin. Therefore, the electronically commutated fan system 100 fails to identify or verify whether the AC input power source Vin is an abnormal three-phase power source or a normal single-phase power source due to the out-phase condition. Accordingly, the electronically commutated fan system 100 further includes a phase predetermination unit 60. The phase predetermination unit 60 is electrically connected to the control unit 30 and predetermines that the input power source Vin is a three-phase AC input power source or a single-phase AC input power source. The control unit 30 receives an input signal Sin transmitted form the voltage detection unit 50, wherein the input signal Sin is related to information such as, for example but not limited to, phase, amplitude, frequency of the AC input power source Vin. In other words, the control unit 30 can realize voltage conditions of each phase of the three-phase AC input power source Vin according to the input signal Sin. The phase predetermination unit 60 provides a phase selection signal Ss to the control unit 30 by selecting the number of phase by a user. The control unit 30 receives the input signal Sin and the phase selection signal Ss, and compares the input signal Sin with the phase selection signal Ss to verify whether the AC input power source Vin is the abnormal three-phase power source or the normal single-phase power source. For example, it is assumed that the number of phase selected or set by the user is three, namely the user realizes that the AC input power source Vin is a three-phase AC input power source. When the control unit 30 determines that the AC input power source Vin is a single-phase AC input power source according to the input signal Sin, the control unit 30 produces an alarm signal Sa to activate an out-phase mechanism since the AC input power source Vin is the abnormal three-phase power source. On the contrary, it is assumed that the number of phase selected or set by the user is one, namely the user realizes that the AC input power source Vin is a single-phase AC input power source. When the control unit 30 determines that the AC input power source Vin is a single-phase AC input power source according to the input signal Sin, the control unit 30 does not produce the alarm signal Sa and does not activate the out-phase mechanism since the AC input power source Vin is the normal single-phase power source. Accordingly, the electronically commutated fan system 100 can accurately identify or verify whether the AC input power source Vin is the abnormal three-phase power source or the normal single-phase power source. Moreover, since the alarm signal Sa is used to inform or alarm that the AC input power source Vin is abnormal, the indicating expression according to the alarm signal Sa is not limited. For example but not limited to, the alarm signal Sa may be a sound-light alarm signal or a display alarm signal. Moreover, the section of the number of phase from the user for the phase predetermination unit 60 may use electrical signals, such as a voltage or current signal, or mechanical contacts, such as relay, jumper, or so on.

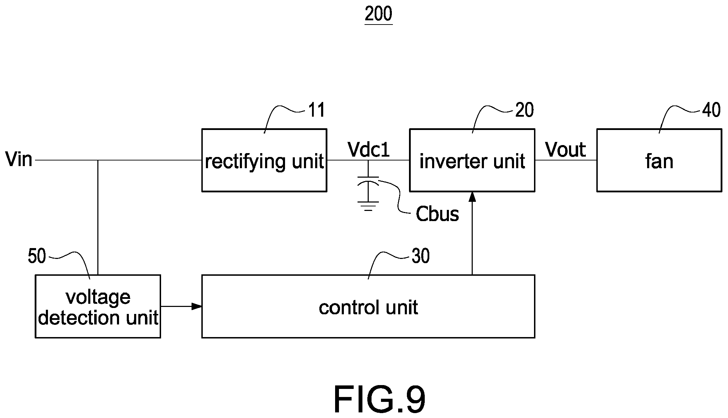

Please refer to FIG. 9, which shows a circuit block diagram of the electronically commutated fan system capable of being supplied by AC and DC power sources according to a fourth embodiment of the present invention. The electronically commutated fan system 200 includes a rectifying unit 11, an inverter unit 20, and a control unit 30. The rectifying unit 11 receives an input power source Vin and rectifies the input power source Vin into a first DC power source Vdc1. The inverter unit 20 is connected between the rectifying unit 11 and a fan 40, and converts the first DC power source Vdc1 into an output power source Vout and provides the output power source Vout to make the fan 40 rotate. The control unit 30 is connected to the inverter unit 20, and controls the inverter unit 20 and adjusts a rotational speed of the fan 40 according to feedback signals (not shown) provided from the inverter unit 20. In the present invention, the input power source Vin may be a DC input power source or an AC input power source. In other words, the electronically commutated fan system 200 is capable of being supplied by either the AC input power source or the DC input power source.

In this embodiment, when the control unit 30 determines that the input power source Vin is the DC input power source or the AC input power source, the rectifying unit 11 converts (rectifies) the DC input power source or the AC input power source into the first DC power source Vdc1. Moreover, when the control unit 30 determines that an amplitude of the input power source Vin is varied, the control unit 30 controls the rotational speed of the fan 40 to be within a first error range Re1. In particular, the control unit 30 determines the input power source Vin according to information of the input power source Vin detected by a voltage detection unit, and the description of the voltage detection unit is detailed hereinafter.

As shown in FIG. 9, the electronically commutated fan system 200 further includes a bus capacitor Cbus. The bus capacitor Cbus is connected between the rectifying unit 11 and the inverter unit 20, and stores and stabilizes the first DC power source Vdc1 so that a voltage crossing the bus capacitor Cbus being the first DC power source Vdc1. The bus capacitor Cbus is used to maintain the first DC power source Vdc1 outputted from the rectifying unit 11 to be within a second error range Re2 so that the rotational speed of the fan 40 to be within the first error range Re 1.

In this embodiment, the electronically commutated fan system 200 further includes a voltage detection unit 50. The voltage detection unit 50 is connected to the control unit 30 and receives the input power source Vin. The voltage detection unit 50 is used to detect that input power source Vin is the DC input power source or the AC input power source, and detect the amplitude of the input power source Vin, and such as a peak voltage value of the input power source Vin. In addition, a phase and/or a frequency of the AC input power source Vin could be detected by the voltage detection unit 50.

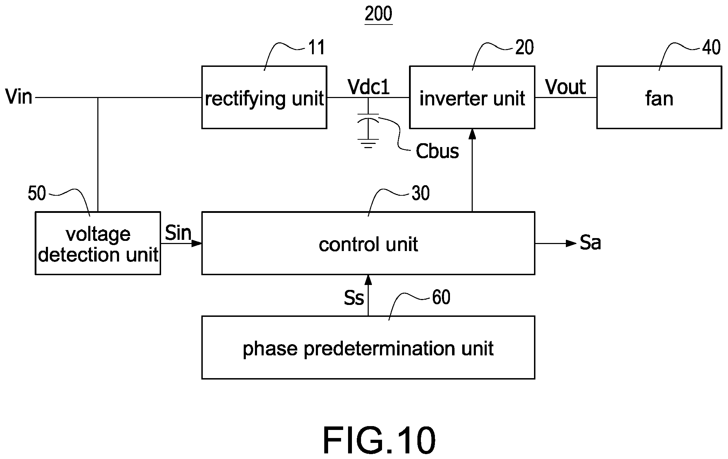

Please refer to FIG. 10, which shows a circuit block diagram of the electronically commutated fan system capable of being supplied by AC and DC power sources according to a fifth embodiment of the present invention. As mentioned above, the electronically commutated fan system 200 can be supplied by a single-phase or three-phase AC input power source. If the three-phase AC input power source Vin is out-phase, however, the three-phase AC input power source Vin is nearly equivalent to the single-phase AC input power source Vin. In other words, when the three-phase AC input power source Vin is out-phase, the feature of the three-phase AC input power source Vin is nearly equivalent to that of the single-phase AC input power source Vin. Therefore, the electronically commutated fan system 200 fails to identify or verify whether the AC input power source Vin is an abnormal three-phase power source or a normal single-phase power source due to the out-phase condition. Accordingly, the electronically commutated fan system 200 further includes a phase predetermination unit 60. The phase predetermination unit 60 is electrically connected to the control unit 30 and predetermines that the input power source Vin is a three-phase AC input power source or a single-phase AC input power source. The control unit 30 receives an input signal Sin transmitted form the voltage detection unit 50, wherein the input signal Sin is related to information such as, for example but not limited to, phase, amplitude, frequency of the AC input power source Vin. In other words, the control unit 30 can realize voltage conditions of each phase of the three-phase AC input power source Vin according to the input signal Sin. The phase predetermination unit 60 provides a phase selection signal Ss to the control unit 30 by selecting the number of phase by a user. The control unit 30 receives the input signal Sin and the phase selection signal Ss, and compares the input signal Sin with the phase selection signal Ss to verify whether the AC input power source Vin is the abnormal three-phase power source or the normal single-phase power source. For example, it is assumed that the number of phase selected or set by the user is three, namely the user realizes that the AC input power source Vin is a three-phase AC input power source. When the control unit 30 determines that the AC input power source Vin is a single-phase AC input power source according to the input signal Sin, the control unit 30 produces an alarm signal Sa to activate an out-phase mechanism since the AC input power source Vin is the abnormal three-phase power source. On the contrary, it is assumed that the number of phase selected or set by the user is one, namely the user realizes that the AC input power source Vin is a single-phase AC input power source. When the control unit 30 determines that the AC input power source Vin is a single-phase AC input power source according to the input signal Sin, the control unit 30 does not produce the alarm signal Sa and does not activate the out-phase mechanism since the AC input power source Vin is the normal single-phase power source. Accordingly, the electronically commutated fan system 200 can accurately identify or verify whether the AC input power source Vin is the abnormal three-phase power source or the normal single-phase power source. Moreover, since the alarm signal Sa is used to inform or alarm that the AC input power source Vin is abnormal, the indicating expression according to the alarm signal Sa is not limited. For example but not limited to, the alarm signal Sa may be a sound-light alarm signal or a display alarm signal. Moreover, the section of the number of phase from the user for the phase predetermination unit 60 may use electrical signals, such as a voltage or current signal, or mechanical contacts, such as relay, jumper, or so on.

To sum up, the electronically commutated fan system capable of being supplied by AC and DC power sources of the present invention has following advantages:
1. The electronically commutated fan system can be supplied by either the AC input power source or the DC input power source, thereby increasing the flexibility and reliability of the power supply for the conventional electronically commutated fan system.
2. The electronically commutated fan system can be applied to the voltage range of wide input power source. Since the power input of the electronically commutated fan system can be three-phase or single-phase, and the voltage variation range is 220 volts to 480 volts, the electronically commutated fan system can be compatible with most input voltages so that the efficiency of providing the flexibility of the power application for the cooling system or module design can be achieved.
3. The rotational speed of the electronically commutated fan system would not be influenced by the variation of the input power source. The conversion module is used to stabilize the first DC power source across the bus capacitor so that the inverter unit does not exceed the range of stably adjusting the rotational speed by adjusting the duty cycle, wherein the inverter unit will exceed the range of stably adjusting the rotational speed by adjusting the duty cycle since the variation of the input power source is too large. Therefore, the effect of stabilizing the rotational speed of the fan and the efficiency of the electronically commutated fan system can be achieved.

## Claims

1. An electronically commutated fan system (100) comprising:
a conversion module (10) configured to receive an input power source (Vin), and the conversion module (10) comprising:
a rectifying unit (11) configured to receive the input power source (Vin) and rectify the power source (Vin) into a second direct-current power source (Vdc2); and
a power conversion unit (12) connected to the rectifying unit (11) and configured to convert the second direct-current power source (Vdc2) into a first direct-current power source (Vdc1);
an inverter unit (20) connected between the power conversion unit (12) of the conversion module (10) and a fan (40), and the inverter unit (20) configured to receive the first direct-current power source (Vdc1), convert the first direct-current power source (Vdc1) into an output power source (Vout), and provide the output power source (Vout) to make the fan (40) rotate; and
a control unit (30) connected to the conversion module (10) and the inverter unit (20), and the control unit (30) configured to control the conversion module (10) and the inverter unit (20) to adjust a rotational speed of the fan (40); the control unit (30) controlling the rotational speed of the fan (40) to be within a first error range (Re1) when the control unit (30) determining that an amplitude of the input power source (Vin) is varied;
**characterized by** a voltage detection unit (50) connected to the control unit (30) and configured to detect that the input power source (Vin) is a direct-current power source or an alternating-current power source to provide an input signal (Sin), and detect the amplitude of the input power source (Vin); and
a phase predetermination unit (60) connected to the control unit (30), the phase predetermination unit (6) configured to provide a phase selection signal (Ss) to the control unit (30) by selecting the number of phase by a user, wherein the phase selection signal (Ss) is provided to select the number of phase of the input power source (Vin);
wherein the control unit (30) determines that the input power source (Vin) is the direct-current power source or the alternating-current power source through the voltage detection unit (50); the conversion module (10) is controlled by the control unit (30) to convert the direct-current power source or the alternating-current power source into the first direct-current power source (Vdc1);
wherein the control unit (30) receives the input signal (Sin) and compares the input signal (Sin) with the phase selection signal (Ss) to determine that the input power source (Vin) is a three-phase alternating-current input power source or a single-phase alternating-current input power source;
if the number of phase of the input power source (Vin) selected by the user corresponding to the phase selection signal (Ss) is different from the number of phase of the input power source (Vin) detected by the voltage detection unit (50) corresponding to the input signal (Sin), the control unit (30) determines that the input power source (Vin) is abnormal; if the number of phase of the input power source (Vin) selected by the user corresponding to the phase selection signal (Ss) is identical to the number of phase of the input power source (Vin) detected by the voltage detection unit (50) corresponding to the input signal (Sin), the control unit (30) determines that the input power source (Vin) is normal;
wherein the conversion module (10) receives the three-phase alternating-current input power source or the single-phase alternating-current input power source; when the phase predetermination unit (60) predetermines that the input power source (Vin) is the three-phase alternating-current input power source and the control unit (30) detects that the input power source (Vin) received by the conversion module (10) is the single-phase alternating-current input power source, the control unit (30) produces an alarm signal (Sa) to activate an out-phase mechanism.

2. The electronically commutated fan system (100) in claim 1, wherein the power conversion unit (12) comprises a switch unit (122);
wherein when the control unit (30) determines that the input power source (Vin) is the direct-current power source and determines that the amplitude of the direct-current power source is within a predetermined voltage range, the control unit (30) controls the switch unit (122) to be turned on or turned off so as to decouple the power conversion unit (12) to make the second direct-current power source (Vdc2) outputted from the rectifying unit (11) be the first direct-current power source (Vdc1); when the control unit (30) determines that the input power source (Vin) is the direct-current power source and determines that the amplitude of the direct-current power source is not within the predetermined voltage range, the power conversion unit (12) is controlled by the control unit (30) to convert the second direct-current power source (Vdc2) into the first direct-current power source (Vdc1).

3. The electronically commutated fan system (100) in claim 2, further comprising:
a bus capacitor (Cbus) connected between the conversion module (10) and the inverter unit (20), and the bus capacitor (Cbus) configured to store the first direct-current power source (Vdc1) so that a voltage crossing the bus capacitor (Cbus) being the first direct-current power source (Vdc1);
wherein when the control unit (30) determines that the amplitude of the input power source (Vin) is varied, the conversion module (10) is controlled by the control unit (30) to make the first direct-current power source (Vdc1) be within a second error range (Re2) so that the rotational speed of the fan (40) to be within the first error range (Re1).

4. The electronically commutated fan system (100) in claim 3, wherein when a variation range of the amplitude of the alternating-current power source or a variation range of an absolute value of the amplitude of the direct-current power source is between 220 volts and 480 volts, the conversion module (10) is controlled by the control unit (30) to make the first direct-current power source (Vdc1) be within the second error range (Re2) and the inverter unit (20) is controlled by the control unit (30) to adjust the output power source (Vout) so that the rotational speed of the fan (40) to be within the first error range (Re1).

5. The electronically commutated fan system (100) in claim 3, wherein the power conversion unit (12) comprises:
an inductor (121) having a first end and a second end, wherein the first end of the inductor (121) is connected to the rectifying unit (11);
the switch unit (122) having a first end, a second end, and a control end, wherein the first end of the switch unit (122) is connected to the second end of the inductor (121), and the second end of the switch unit (122) is grounded; and
a diode (123) having an anode and a cathode, wherein the anode is connected to the second end of the inductor (121) and the first end of the switch unit (122), and the cathode is connected to the bus capacitor (Cbus);
wherein the control unit (30) is connected to the control end of the switch unit (122) and controls turning-on and turning-off of the switch unit (122) to stabilize the first direct-current power source (Vdc1); when the control unit (30) determines that the absolute value of the amplitude of the direct-current power source is within the predetermined voltage range, the switch unit (122) is turned off so that the power conversion unit (12) is decoupled.

6. The electronically commutated fan system (100) in claim 3, wherein the power conversion unit (12) comprises:
an inductor set (121') configured to receive the input power source (Vin) and connected to the rectifying unit (11);
the switch unit (122) having a first end, a second end, and a control end, wherein the rectifying unit (11) is connected in parallel to the switch unit (122) at the first end and the second end of the switch unit (122), and the second end of the switch unit (122) is grounded; and
a diode (123) having an anode and a cathode, wherein the anode is connected to the first end of the switch unit (122) and the rectifying unit (11), and the cathode is connected to the bus capacitor (Cbus);
wherein the control unit (30) is connected to the control end of the switch unit (122) and controls turning-on and turning-off of the switch unit (122) to stabilize the first direct-current power source (Vdc1); when the control unit (30) determines that the absolute value of the amplitude of the direct-current power source is within the predetermined voltage range, the switch unit (122) is turned off so that the power conversion unit (12) is decoupled.

7. The electronically commutated fan system (100) in claim 3, wherein the power conversion unit (12) comprises:
the switch unit (122) having a first end, a second end, and a control end, wherein the first end of the switch unit (122) is connected to the rectifying unit (11);
an inductor (121) having a first end and a second end, wherein the first end of the inductor (121) is connected to the second end of the switch unit (122), and the second end of the inductor (121) is connected to the bus capacitor (Cbus);
a diode (123) having an anode and a cathode, wherein the cathode is connected to the second end of the switch unit (122) and the first end of the inductor (121), and the anode is grounded;
wherein the control unit (30) is connected to the control end of the switch unit (122) and controls turning-on and turning-off of the switch unit (122) to stabilize the first direct-current power source (Vdc1); when the control unit (30) determines that the absolute value of the amplitude of the direct-current power source is within the predetermined voltage range, the switch unit (122) is turned on so that the power conversion unit (12) is decoupled.

8. The electronically commutated fan system (100) in claim 2, wherein the predetermined voltage range is between 220 volts and 480 volts.

## Patentansprüche

1. Elektronisch kommutiertes Lüftersystem (100), umfassend:
ein Umwandlungsmodul (10), das konfiguriert ist, um eine Eingangsstromquelle (Vin) zu empfangen, und das Umwandlungsmodul (10) umfasst:
eine Gleichrichtereinheit (11), die konfiguriert ist, um die Eingangsleistungsquelle (Vin) aufzunehmen und die Leistungsquelle (Vin) in eine zweite Gleichstromleistungsquelle (Vdc2) zu gleichrichten; und
eine Leistungsumwandlungseinheit (12), die mit der Gleichrichtereinheit (11) verbunden und konfiguriert ist, um die zweite Gleichstromquelle (Vdc2) in eine erste Gleichstromquelle (Vdc1) umzuwandeln;
eine Wechselrichtereinheit (20), die zwischen der Leistungsumwandlungseinheit (12) des Umwandlungsmoduls (10) und einen Lüfter (40) geschaltet ist, und die konfiguriert ist, um die erste Gleichstromquelle (Vdc1) zu empfangen, die erste Gleichstromquelle (Vdc1) in eine Ausgangsstromquelle (Vout) umzuwandeln und die Ausgangsstromquelle (Vout) bereitzustellen, um den Lüfter (40) zu drehen; und
eine Steuereinheit (30), die mit dem Umwandlungsmodul (10) und der Wechselrichtereinheit (20) verbunden ist, und die konfiguriert ist, um das Umwandlungsmodul (10) und die Wechselrichtereinheit (20) zu steuern, um eine Drehzahl des Lüfters (40) einzustellen; die Steuereinheit (30) steuert die Drehzahl des Lüfters (40), um innerhalb eines ersten Fehlerbereichs (Re1) zu liegen, wenn die Steuereinheit (30) bestimmt, dass eine Amplitude der Eingangsstromquelle (Vin) verändert wird;
**gekennzeichnet durch** eine Spannungserfassungseinheit (50), die mit der Steuereinheit (30) verbunden und konfiguriert ist, um zu erfassen, dass die Eingangsleistungsquelle (Vin) eine Gleichstromquelle oder eine Wechselstromquelle ist, um ein Eingangssignal (Sin) bereitzustellen und die Amplitude der Eingangsleistungsquelle (Vin) zu erfassen; und
eine Phasenvorbestimmungseinheit (60), die mit der Steuereinheit (30) verbunden ist, wobei die Phasenvorbestimmungseinheit (6) konfiguriert ist, um der Steuereinheit (30) ein Phasenauswahlsignal (Ss) durch Auswählen der Anzahl der Phasen durch einen Benutzer bereitzustellen, wobei das Phasenauswahlsignal (Ss) bereitgestellt wird, um die Anzahl der Phasen der Eingangsstromquelle (Vin) auszuwählen;
wobei die Steuereinheit (30) bestimmt, dass die Eingangsleistungsquelle (Vin) die Gleichstromquelle oder die Wechselstromquelle ist, durch die Spannungserfassungseinheit (50); das Umwandlungsmodul (10) von der Steuereinheit (30) gesteuert wird, um die Gleichstromquelle oder die Wechselstromquelle in die erste Gleichstromquelle (Vdc1) umzuwandeln;
wobei die Steuereinheit (30) das Eingangssignal (Sin) empfängt und das Eingangssignal (Sin) mit dem Phasenauswahlsignal (Ss) vergleicht, um zu bestimmen, dass die Eingangsstromquelle (Vin) eine dreiphasige Wechselstrom-Eingangsstromquelle oder eine einphasige Wechselstrom-Eingangsstromquelle ist;
wenn die Anzahl der Phasen der Eingangsstromquelle (Vin), die vom Benutzer entsprechend dem Phasenauswahlsignal (Ss) ausgewählt wurde, von der Anzahl der Phasen der Eingangsstromquelle (Vin) abweicht, die von der Spannungserfassungseinheit (50) entsprechend dem Eingangssignal (Sin) erfasst wird, wobei die Steuereinheit (30) bestimmt, dass die Eingangsstromquelle (Vin) anormal ist; wenn die Anzahl der Phasen der Eingangsstromquelle (Vin), die vom Benutzer entsprechend dem Phasenauswahlsignal (Ss) ausgewählt wurde, identisch ist mit der Anzahl der Phasen der Eingangsstromquelle (Vin), die von der Spannungserfassungseinheit (50) entsprechend dem Eingangssignal (Sin) erfasst wird, bestimmt die Steuereinheit (30), dass die Eingangsstromquelle (Vin) normal ist;
wobei das Umwandlungsmodul (10) die dreiphasige Wechselstromeingangsstromquelle oder die einphasige Wechselstromeingangsstromquelle empfängt; wenn die Phasenvorbestimmungseinheit (60) vorbestimmt, dass die Eingangsstromquelle (Vin) die dreiphasige Wechselstromeingangsstromquelle ist und die Steuereinheit (30) erfasst, dass die vom Umwandlungsmodul (10) empfangene Eingangsstromquelle (Vin) die einphasige Wechselstromeingangsstromquelle ist, erzeugt die Steuereinheit (30) ein Alarmsignal (Sa) zum Aktivieren eines Außer-Phase-Mechanismus.

2. Elektronisch kommutiertes Lüftersystem (100) nach Anspruch 1, wobei die Leistungsumwandlungseinheit (12) eine Schalteinheit (122) umfasst;
wobei, wenn die Steuereinheit (30) bestimmt, dass die Eingangsleistungsquelle (Vin) die Gleichstromleistungsquelle ist, und bestimmt, dass die Amplitude der Gleichstromleistungsquelle innerhalb eines vorbestimmten Spannungsbereichs liegt, die Steuereinheit (30) die anzuschaltende oder auszuschaltende Schalteinheit (122) steuert, um die Leistungsumwandlungseinheit (12) zu entkoppeln, so dass die zweite Gleichstromquelle (Vdc2), die von der Gleichrichtereinheit (11) ausgegeben wird, die erste Gleichstromquelle (Vdc1) ist; wenn die Steuereinheit (30) bestimmt, dass die Eingangsleistungsquelle (Vin) die Gleichstromleistungsquelle ist, und bestimmt, dass die Amplitude der Gleichstromleistungsquelle nicht innerhalb des vorbestimmten Spannungsbereichs liegt, die Leistungsumwandlungseinheit (12) von der Steuereinheit (30) gesteuert wird, um die zweite Gleichstromleistungsquelle (Vdc2) in die erste Gleichstromquelle (Vdc1) umzuwandeln.

3. Elektronisch kommutiertes Lüftersystem (100) nach Anspruch 2, ferner umfassend:
einen Buskondensator (Cbus), der zwischen dem Wandlungsmodul (10) und der Wechselrichtereinheit (20) geschaltet ist, und den Buskondensator (Cbus), der konfiguriert ist, um die erste Gleichstromquelle (Vdc1) zu speichern, so dass eine den Buskondensator (Cbus) kreuzende Spannung die erste Gleichstromquelle (Vdc1) ist;
wobei, wenn die Steuereinheit (30) bestimmt, dass die Amplitude der Eingangsleistungsquelle (Vin) variiert wird, das Umwandlungsmodul (10) durch die Steuereinheit (30) gesteuert wird, um die erste Gleichstromleistungsquelle (Vdc1) innerhalb eines zweiten Fehlerbereichs (Re2) zubringen, so dass die Drehzahl des Lüfters (40) innerhalb des ersten Fehlerbereichs (Re1) liegt.

4. Elektronisch kommutiertes Lüftersystem (100) nach Anspruch 3, wobei, wenn ein Änderungsbereich der Amplitude der Wechselstromquelle oder ein Änderungsbereich eines Absolutwertes der Amplitude der Gleichstromquelle zwischen 220 Volt und 480 Volt liegt, das Umwandlungsmodul (10) von der Steuereinheit (30) gesteuert wird, um die erste Gleichstromquelle (Vdc1) innerhalb des zweiten Fehlerbereichs (Re2) zu bringen, und die Wechselrichtereinheit (20) von der Steuereinheit (30) gesteuert wird, um die Ausgangsstromquelle (Vout) so einzustellen, dass die Drehzahl des Lüfters (40) innerhalb des ersten Fehlerbereichs (Re1) liegt.

5. Elektronisch kommutiertes Lüftersystem (100) nach Anspruch 3, wobei die Leistungsumwandlungseinheit (12) umfasst:
einen Induktor (121) mit einem ersten Ende und einem zweiten Ende, wobei das erste Ende des Induktors (121) mit der Gleichrichtereinheit (11) verbunden ist;
die Schalteinheit (122) ein erstes Ende, ein zweites Ende und ein Steuerende aufweist, wobei das erste Ende der Schalteinheit (122) mit dem zweiten Ende des Induktors (121) verbunden ist und das zweite Ende der Schalteinheit (122) geerdet ist; und
eine Diode (123) mit einer Anode und einer Kathode, wobei die Anode mit dem zweiten Ende des Induktors (121) und dem ersten Ende der Schalteinheit (122) verbunden ist und die Kathode mit dem Buskondensator (Cbus) verbunden ist;
wobei die Steuereinheit (30) mit dem Steuerende der Schalteinheit (122) verbunden ist und das Ein- und Ausschalten der Schalteinheit (122) steuert, um die erste Gleichstromquelle (Vdc1) zu stabilisieren; wenn die Steuereinheit (30) bestimmt, dass der Absolutwert der Amplitude der Gleichstromquelle innerhalb des vorbestimmten Spannungsbereichs liegt, wird die Schalteinheit (122) ausgeschaltet, so dass die Leistungsumwandlungseinheit (12) entkoppelt ist.

6. Elektronisch kommutiertes Lüftersystem (100) nach Anspruch 3, wobei die Leistungsumwandlungseinheit (12) umfasst:
einen Induktorsatz (121'), der zum Empfangen der Eingangsstromquelle (Vin) konfiguriert und mit der Gleichrichtereinheit (11) verbunden ist;
die Schalteinheit (122) ein erstes Ende, ein zweites Ende und ein Steuerende aufweist, wobei die Gleichrichtereinheit (11) parallel zur Schalteinheit (122) am ersten Ende und am zweiten Ende der Schalteinheit (122) geschaltet ist und das zweite Ende der Schalteinheit (122) geerdet ist; und
eine Diode (123) mit einer Anode und einer Kathode, wobei die Anode mit dem ersten Ende der Schalteinheit (122) und der Gleichrichtereinheit (11) verbunden ist und die Kathode mit dem Buskondensator (Cbus) verbunden ist;
wobei die Steuereinheit (30) mit dem Steuerende der Schalteinheit (122) verbunden ist und das Ein- und Ausschalten der Schalteinheit (122) steuert, um die erste Gleichstromquelle (Vdc1) zu stabilisieren; wenn die Steuereinheit (30) bestimmt, dass der Absolutwert der Amplitude der Gleichstromquelle innerhalb des vorbestimmten Spannungsbereichs liegt, wird die Schalteinheit (122) ausgeschaltet, so dass die Leistungsumwandlungseinheit (12) entkoppelt ist.

7. Elektronisch kommutiertes Lüftersystem (100) nach Anspruch 3, wobei die Leistungsumwandlungseinheit (12) umfasst:
die Schalteinheit (122) ein erstes Ende, ein zweites Ende und ein Steuerende aufweist, wobei das erste Ende der Schalteinheit (122) mit der Gleichrichtereinheit (11) verbunden ist;
einen Induktor (121) mit einem ersten Ende und einem zweiten Ende, wobei das erste Ende des Induktors (121) mit dem zweiten Ende der Schalteinheit (122) verbunden ist, und das zweite Ende des Induktors (121) mit dem Buskondensator (Cbus) verbunden ist;
eine Diode (123) mit einer Anode und einer Kathode, wobei die Kathode mit dem zweiten Ende der Schalteinheit (122) und dem ersten Ende des Induktors (121) verbunden ist und die Anode geerdet ist;
wobei die Steuereinheit (30) mit dem Steuerende der Schalteinheit (122) verbunden ist und das Ein- und Ausschalten der Schalteinheit (122) steuert, um die erste Gleichstromquelle (Vdc1) zu stabilisieren; wenn die Steuereinheit (30) bestimmt, dass der Absolutwert der Amplitude der Gleichstromquelle innerhalb des vorbestimmten Spannungsbereichs liegt, wird die Schalteinheit (122) eingeschaltet, so dass die Leistungsumwandlungseinheit (12) entkoppelt ist.

8. Elektronisch kommutiertes Lüftersystem (100) nach Anspruch 2, wobei der vorgegebene Spannungsbereich zwischen 220 Volt und 480 Volt liegt.

## Revendications

1. Système de ventilateur à commutation électronique (100) comprenant :
un module de conversion (10) configuré pour recevoir une source d'alimentation d'entrée (Vin), et le module de conversion (10) comprenant :
une unité de redressement (11) configurée pour recevoir la source d'alimentation d'entrée (Vin) et redresser la source d'alimentation (Vin) en une seconde source d'alimentation à courant continu (Vdc2) ; et
une unité de conversion d'énergie (12) reliée à l'unité de redressement (11) et configurée pour convertir la seconde source d'alimentation à courant continu (Vdc2) en une première source d'alimentation à courant continu (Vdc1) ;
une unité d'onduleur (20) reliée entre l'unité de conversion d'énergie (12) du module de conversion (10) et un ventilateur (40), et l'unité d'onduleur (20) étant configurée pour recevoir la première source d'alimentation à courant continu (Vdc1), convertir la première source d'alimentation à courant continu (Vdc1) en une source d'alimentation de sortie (Vout), et fournir la source d'alimentation de sortie (Vout) pour amener le ventilateur (40) à tourner ; et
une unité de commande (30) reliée au module de conversion (10) et à l'unité d'onduleur (20), et l'unité de commande (30) étant configurée pour commander le module de conversion (10) et l'unité d'onduleur (20) pour ajuster une vitesse de rotation du ventilateur (40) ; l'unité de commande (30) commandant la vitesse de rotation du ventilateur (40) pour être dans une première plage d'erreurs (Re1) lorsque l'unité de commande (30) détermine qu'une amplitude de la source d'alimentation d'entrée (Vin) est modifiée ;
**caractérisé par** une unité de détection de tension (50) reliée à l'unité de commande (30) et configurée pour détecter que la source d'alimentation d'entrée (Vin) est une source d'alimentation à courant continu ou une source d'alimentation à courant alternatif pour fournir un signal d'entrée (Sin), et détecter l'amplitude de la source d'alimentation d'entrée (Vin) ; et
une unité de prédétermination de phase (60) reliée à l'unité de commande (30), l'unité de prédétermination de phase (6) étant configurée pour fournir un signal de sélection de phase (Ss) à l'unité de commande (30) par sélection du nombre de phase par un utilisateur, le signal de sélection de phase (Ss) étant fourni pour sélectionner le nombre de phase de la source d'alimentation d'entrée (Vin) ;
l'unité de commande (30) déterminant que la source d'alimentation d'entrée (Vin) est la source d'alimentation à courant continu ou la source d'alimentation à courant alternatif par l'intermédiaire de l'unité de détection de tension (50) ; le module de conversion (10) étant commandé par l'unité de commande (30) pour convertir la source d'alimentation à courant continu ou la source d'alimentation à courant alternatif en première source d'alimentation à courant continu (Vdc1) ;
l'unité de commande (30) recevant le signal d'entrée (Sin) et comparant le signal d'entrée (Sin) au signal de sélection de phase (Ss) pour déterminer que la source d'alimentation d'entrée (Vin) est une source d'alimentation d'entrée à courant alternatif triphasée ou une source d'alimentation d'entrée à courant alternatif monophasée ;
si le nombre de phase de la source d'alimentation d'entrée (Vin) sélectionné par l'utilisateur correspondant au signal de sélection de phase (Ss) est différent du nombre de phase de la source d'alimentation d'entrée (Vin) détecté par l'unité de détection de tension (50) correspondant au signal d'entrée (Sin), l'unité de commande (30) déterminant que la source d'alimentation d'entrée (Vin) est anormale ; si le nombre de phase de la source d'alimentation d'entrée (Vin) sélectionné par l'utilisateur correspondant au signal de sélection de phase (Ss) est identique au nombre de phase de la source d'alimentation d'entrée (Vin) détecté par l'unité de détection de tension (50) correspondant au signal d'entrée (Sin), l'unité de commande (30) déterminant que la source d'alimentation d'entrée (Vin) est normale ;
le module de conversion (10) recevant la source d'alimentation d'entrée à courant alternatif triphasée ou la source d'alimentation d'entrée à courant alternatif monophasée ; lorsque l'unité de prédétermination de phase (60) prédétermine que la source d'alimentation d'entrée (Vin) est la source d'alimentation d'entrée à courant alternatif triphasée et que l'unité de commande (30) détecte que la source d'alimentation d'entrée (Vin) reçue par le module de conversion (10) est la source d'alimentation d'entrée à courant alternatif monophasée, l'unité de commande (30) produisant un signal d'alarme (Sa) pour activer un mécanisme hors phase.

2. Système de ventilateur à commutation électronique (100) selon la revendication 1, dans lequel l'unité de conversion d'énergie (12) comprend une unité de commutateur (122) ;
dans lequel, lorsque l'unité de commande (30) détermine que la source d'alimentation d'entrée (Vin) est la source d'alimentation à courant continu et détermine que l'amplitude de la source d'alimentation à courant continu se trouve dans une plage de tensions prédéterminée, l'unité de commande (30) amène l'unité de commutateur (122) à être fermée ou ouverte de façon à découpler l'unité de conversion d'énergie (12) pour amener la seconde source d'alimentation à courant continu (Vdc2) délivrée par l'unité de redressement (11) à être la première source d'alimentation à courant continu (Vdc1) ; lorsque l'unité de commande (30) détermine que la source d'alimentation d'entrée (Vin) est la source d'alimentation à courant continu et détermine que l'amplitude de la source d'alimentation à courant continu n'est pas dans la plage de tensions prédéterminée, l'unité de conversion d'énergie (12) est commandée par l'unité de commande (30) pour convertir la seconde source d'alimentation à courant continu (Vdc2) en la première source d'alimentation à courant continu (Vdc1).

3. Système de ventilateur à commutation électronique (100) selon la revendication 2, comprenant en outre :
un condensateur de bus (Cbus) relié entre le module de conversion (10) et l'unité d'onduleur (20), et le condensateur de bus (Cbus) étant configuré pour stocker la première source d'alimentation à courant continu (Vdc1) de telle sorte qu'une tension traversant le condensateur de bus (Cbus) est la première source d'alimentation à courant continu (Vdc1) ;
dans lequel, lorsque l'unité de commande (30) détermine que l'amplitude de la source d'alimentation d'entrée (Vin) est modifiée, le module de conversion (10) est commandé par l'unité de commande (30) pour amener la première source d'alimentation à courant continu (Vdc1) à être dans une seconde plage d'erreurs (Re2) de telle sorte que la vitesse de rotation du ventilateur (40) se trouve dans la première plage d'erreurs (Re1).

4. Système de ventilateur à commutation électronique (100) selon la revendication 3, dans lequel, lorsqu'une plage de variation de l'amplitude de la source d'alimentation à courant alternatif ou qu'une plage de variation d'une valeur absolue de l'amplitude de la source d'alimentation à courant continu est comprise entre 220 volts et 480 volts, le module de conversion (10) est commandé par l'unité de commande (30) pour amener la première source d'alimentation à courant continu (Vdc1) à être dans la seconde plage d'erreurs (Re2) et l'unité d'onduleur (20) est commandée par l'unité de commande (30) pour ajuster la source d'alimentation de sortie (Vout) de telle sorte que la vitesse de rotation du ventilateur (40) se trouve dans la première plage d'erreurs (Re1).

5. Système de ventilateur à commutation électronique (100) selon la revendication 3, dans lequel l'unité de conversion d'énergie (12) comprend :
une bobine d'inductance (121) ayant une première extrémité et une seconde extrémité, la première extrémité de la bobine d'inductance (121) étant reliée à l'unité de redressement (11) ;
l'unité de commutateur (122) ayant une première extrémité, une seconde extrémité et une extrémité de commande, la première extrémité de l'unité de commutateur (122) étant reliée à la seconde extrémité de la bobine d'inductance (121), et la seconde extrémité de l'unité de commutateur (122) étant mise à la masse ; et
une diode (123) ayant une anode et une cathode, l'anode étant reliée à la seconde extrémité de la bobine d'inductance (121) et à la première extrémité de l'unité de commutateur (122), et la cathode étant reliée au condensateur de bus (Cbus) ;
dans lequel l'unité de commande (30) est reliée à l'extrémité de commande de l'unité de commutateur (122) et commande la fermeture et l'ouverture de l'unité de commutateur (122) pour stabiliser la première source d'alimentation à courant continu (Vdc1) ; lorsque l'unité de commande (30) détermine que la valeur absolue de l'amplitude de la source d'alimentation à courant continu se trouve dans la plage de tensions prédéterminée, l'unité de commutateur (122) est ouverte de telle sorte que l'unité de conversion d'énergie (12) est découplée.

6. Système de ventilateur à commutation électronique (100) selon la revendication 3, dans lequel l'unité de conversion d'énergie (12) comprend :
un ensemble de bobines d'inductance (121') configurées pour recevoir la source d'alimentation d'entrée (Vin) et reliées à l'unité de redressement (11) ;
l'unité de commutateur (122) ayant une première extrémité, une seconde extrémité et une extrémité de commande, l'unité de redressement (11) étant reliée en parallèle à l'unité de commutateur (122) au niveau de la première extrémité et de la seconde extrémité de l'unité de commutateur (122), et la seconde extrémité de l'unité de commutateur (122) étant mise à la masse ; et
une diode (123) ayant une anode et une cathode, l'anode étant reliée à la première extrémité de l'unité de commutateur (122) et à l'unité de redressement (11), et la cathode étant reliée au condensateur de bus (Cbus) ;
dans lequel l'unité de commande (30) est reliée à l'extrémité de commande de l'unité de commutateur (122) et commande la fermeture et l'ouverture de l'unité de commutateur (122) pour stabiliser la première source d'alimentation à courant continu (Vdc1) ; lorsque l'unité de commande (30) détermine que la valeur absolue de l'amplitude de la source d'alimentation à courant continu se trouve dans la plage de tensions prédéterminée, l'unité de commutateur (122) est ouverte de telle sorte que l'unité de conversion d'énergie (12) est découplée.

7. Système de ventilateur à commutation électronique (100) selon la revendication 3, dans lequel l'unité de conversion d'énergie (12) comprend :
l'unité de commutateur (122) ayant une première extrémité, une seconde extrémité et une extrémité de commande, la première extrémité de l'unité de commutateur (122) étant reliée à l'unité de redressement (11) ;
une bobine d'inductance (121) ayant une première extrémité et une seconde extrémité, la première extrémité de la bobine d'inductance (121) étant reliée à la seconde extrémité de l'unité de commutateur (122), et la seconde extrémité de la bobine d'inductance (121) étant reliée au condensateur de bus (Cbus) ;
une diode (123) ayant une anode et une cathode, la cathode étant reliée à la seconde extrémité de l'unité de commutateur (122) et à la première extrémité de la bobine d'inductance (121), et l'anode étant mise à la masse ;
dans lequel l'unité de commande (30) est reliée à l'extrémité de commande de l'unité de commutateur (122) et commande la fermeture et l'ouverture de l'unité de commutateur (122) pour stabiliser la première source d'alimentation à courant continu (Vdc1) ; lorsque l'unité de commande (30) détermine que la valeur absolue de l'amplitude de la source d'alimentation à courant continu se trouve dans la plage de tensions prédéterminée, l'unité de commutateur (122) est fermée de telle sorte que l'unité de conversion d'énergie (12) est découplée.

8. Système de ventilateur à commutation électronique (100) selon la revendication 2, dans lequel la plage de tensions prédéterminée est comprise entre 220 volts et 480 volts.
